# EUROPEAN PATENT APPLICATION

(11) **EP 4 201 884 A1**
(43) Date of publication of application: **28.06.2023**
(21) Application number: 21858449.8
(22) Date of filing: 16.06.2021
(51) Int. Cl.: C01F 7/02, C01F 7/44, A01N 59/06, A01N 59/20

(54) **ANTIBACTERIAL COMPOSITE WITH INSTANT STERILIZATION CAPABILITY, AND PREPARATION METHOD THEREFOR**

(30) Priority: 19.08.2020 KR 20200104171; 18.01.2021 KR 20210006880
(71) Applicant: Osangjaiel Co., Ltd, Incheon 21406 (KR)
(72) Inventor: LEE, Kug Rae, Seongnam-si Gyeonggi-do 13552 (KR); KIM, Sung Yup, Seoul 02463 (KR); PARK, Eui Su, Ansan-si Gyeonggi-do 15454 (KR); LEE, Myoung Jae, Seosan-si Chungcheongnam-do 31931 (KR); PARK, Sang Gil, Seosan-si Chungcheongnam-do 31931 (KR)
(74) Representative: Caspary, Karsten
(86) International application number: PCT/KR2021/007561
(87) International publication number: WO 2022/039361

(57) **Abstract**

The present invention relates to: an antibacterial composite material with a bactericidal effect, having a shape in which aluminum hydroxide is coupled, in an island form, to the surface of a copper compound; and a preparation method therefor, and since the antibacterial composite material rapidly exhibits an immediate bactericidal effect against bacteria or viruses for a short time of five minutes or less and the bactericidal effect is maintained for a long time, the antibacterial composite material is usable in various fields requiring an antibacterial effect, and thus an effective antibacterial and antiviral function can be provided.

## Description

### Technical Field

The present invention relates to an antibacterial composite material having an immediate bactericidal effect and a method of manufacturing the same. More particularly, the present invention relates to an antibacterial composite material which is a composite of a copper compound and aluminum hydroxide. The antibacterial composite material of the present invention not only exhibits an immediate bactericidal effect against bacteria or viruses, but also retains such bactericidal performance for a long time. The antibacterial composite material can be utilized in various areas in need of antibacterial activity to provide effective antibacterial and antiviral functions.

### Background Art

Antibacterial agents or antiviral agents are substances that have an antibacterial function that inhibits and prevents the proliferation of bacteria or viruses and that have a bactericidal function of killing bacterial or viruses.

Such antibacterial or antiviral agents are used to coat the surface of an existing product or are mixed with materials in the process of making the product, thereby imparting an antibacterial, antiviral, and bactericidal effect to the product.

Antibacterial agents are largely divided into organic antibacterial agents and inorganic antibacterial agents.

An organic antibacterial agent includes an organic compound and an organic metal with antibacterial functions. The organic antibacterial agent has an action close to antibacterial rather than bactericidal. The organic antibacterial agent immediately exhibits an effect of preventing the proliferation of bacteria or viruses when an antibacterial surface is exposed to bacteria or viruses and are cheap. For the reasons, the organic antibacterial agent is widely used.

However, organic antibacterial agents are not durable, are not suitable for use in high temperature environments, and are hazardous to the human body or the environment.

In the case of inorganic antibacterial agents, they are not hazardous to the human body and environment, do not generate resistant bacteria, and retain the antibacterial function for a longer period of time than organic antibacterial agents. For these reasons, inorganic antibacterial agents are gradually expanding their applications.

Recently, copper has become popular as an inorganic antibacterial agent. Copper is a metal with excellent strength and ductility, excellent heat and electrical conductivity, and is widely used to make building materials, kitchen utensils, and accessories, as well as to make components for electrical and electronic devices. In addition, copper is an essential element in various living bodies, including humans, because it bonds with proteins to deliver electrons or plays an important role in oxidation, reduction, etc.

Such copper is characterized by antibacterial action, and has been widely used in real life for a long time, for example for disinfecting wounds or for making containers for drinking water. Recently, the use of copper with antibacterial action has increased as coronavirus infection-19 (COVID-19) has become more prevalent around the world.

Pure copper has the best sterilization ability but copper alloys containing 55% to 70% of copper are also effective in sterilization. In particular, copper has excellent bactericidal capability against common fungi and bacteria, as well as excellent antibacterial capability against superbacteria such as methicillin-resistant Staphylococcus aureus (MRSA). For these results, in 2008 the U.S. Environmental Health Administration (EPA) registered about 300 copper alloys as antibacterial materials useful for public health.

The antibacterial action of copper appears when trace metal ions disrupt the metabolic action of microorganisms and kill the microorganisms, which is called "oligodynamic effect". The oligodynamic effect is exhibited by copper, gold, silver, platinum, aluminum, mercury, nickel, lead, cobalt, and zinc. Among them. copper and silver, which are harmless to the human body and have a relatively fast sterilization effect, are widely used in real life.

Antibacterial materials utilizing conventional copper, silver, etc. require at least 24 hours before their performance is 99.9% effective (i.e., when 99% of bacteria or viruses are killed). Therefore, there is a problem that not only the bacteria or viruses continue to proliferate during survival until most of them die but also constantly spread to other places through numerous contacts. The retention period of known bacteria or viruses varies from several hours to several days depending on the type of antibacterial substance or product.

For example, bacteria or viruses stay for up to 2 hours when being in an aerosol state, can stay for 2 to 8 hours when being present on the surface of latex gloves and aluminum cans, and stay for up to 5 days when being on the surface of metal handles, glass windows, glass and ceramic pots.

Since the bacteria and viruses are fast to propagate, it is important to kill them as soon as possible in order to block them, but since existing antibacterial materials perform antibacterial functions after at least 24 hours, development of antibacterial materials with immediate bactericidal performance is necessary.

### Disclosure

### Technical Problem

The objective of the present invention is to provide an antibacterial composite material exhibiting a long-lasting immediate bactericidal effect against bacteria or viruses, the antibacterial composite material having effective antibacterial and antiviral functions so as to be used in various applications required to have an antibacterial function.

### Technical Solution

One embodiment of the present invention to achieve the objective relates to an antibacterial composite material having a bactericidal effect, the antibacterial composite material being configured such that aluminum hydroxide in an island form is bound to the surface of a copper compound.

The aluminum hydroxide is a highly crystalline boehmite composite material particle composed of a first boehmite in a gamma phase (γ-phase) and a second boehmite obtained by dehydration of aluminum hydroxide, in which the first boehmite and the second boehmite are bonded to each other by a hydrogen bond.

Another embodiment of the present invention relates to a method of preparing an antibacterial composite material having an immediate bactericidal effect, the method comprising: a mixing step of mixing an aluminum hydroxide composition and a copper compound to produce a raw material mixture; a spray drying step of spray drying the raw material mixture to form an antibacterial composite material; and a cooling step of cooling the antibacterial composite material.

The antibacterial composite material is formed such that an island form of aluminum hydroxide is bonded to the surface of the copper compound.

In the raw material mixture, the aluminum hydroxide composition and the copper compound may be mixed in a weight ratio of 1:0.7 to 1.2.

The aluminum hydroxide composition may be obtained by mixing the aluminum hydroxide composition with ultra-pure water at a concentration in a range of 5% to 15% by weight and then milling the resulting mixture.

The copper compound may have an average particle size in a range of 6 µm to 20 µm, and the aluminum hydroxide may have a particle size in a range of 10 nm to 500 nm.

The aluminum hydroxide may be a highly crystalline boehmite composite material particle composed of a first boehmite in a gamma phase (γ-phase) and a second boehmite obtained by dehydration of aluminum hydroxide, in which the first boehmite and the second boehmite may be bonded to each other by a hydrogen bond.

The spray drying step may be a step of spray drying the raw material mixture at a temperature in a range of 180°C to 220°C.

The cooling step may be a step of cooling an antibacterial composite material particle obtained through the spray drying step to a temperature of 90°C to 120°C.

A further embodiment of the present invention relates to an antibacterial composite material having an immediate bactericidal effect, the composite material being manufactured by the method.

### Advantageous Effects

The antibacterial composite material of the present invention exhibits a long-lasting immediate bactericidal effect against bacteria or viruses, the antibacterial composite material having effective antibacterial and antiviral functions so as to be used in various applications required to have an antibacterial function.

### Description of Drawings

FIG. 1 is a SEM image of am antibacterial composite material prepared according to one example of the present invention.
FIG. 2 is a XRD result of antibacterial composite material prepared according to one example of the present invention.
FIGS. 3A and 3B are SEM images of cotton fibers coated with the antibacterial composite material prepared according to one example of the present invention.
FIGS. 4A and 4B are SEM images of samples used in Experimental Example 2.
FIG. 5 is a photograph illustrating the test results of Experimental Example 4.

### Best Mode

Prior to describing preferred embodiments of the present invention, it should be noted that the terms and words used in the present specification and the appended claims should not be construed as limited to conventional or dictionary meanings but should be construed as meaning and concept consistent with the technical idea of the present invention.

It will be further understood that the terms "comprises" and/or "comprising", or "includes" and/or "including", or "has" and/or "having", when used in this specification, specify the presence of stated features, regions, integers, steps, operations, elements, and/or components, but do not preclude the presence or addition of one or more other features, regions, integers, steps, operations, elements, and/or components.

Throughout the description therein, "%" used to indicate the concentration of a particular material means, unless otherwise stated, % by weight of solid/solid, % by weight of solid/liquid, and % by volume of liquid/liquid.

It will be understood that, although the identification symbols may be used herein to describe various steps, the terms are used only for distinguishing one element step from another step, and the essence, sequence, or order of the steps are not limited by the terms. Therefore, unless explicitly stated for the order of each step, the steps may be performed in a different order from the order in which the steps are described or termed. That is, each of the steps may be performed in the same order as described herein, substantially simultaneously, or in reverse order.

In the description of the present specification, the term "antibacterial" means the function of inhibiting and preventing the proliferation of a fungus or virus, and the term "bactericidal" means the function of killing a fungus or virus as well as performing the antibacterial function.

Herein after, embodiments of the present invention will be described. However, the scope of the present invention is not limited to the preferred embodiments described below, and those skilled in the art may implement various modified forms of the contents described herein without departing from the scope of the present invention.

The present invention relates to an antibacterial composite material having an immediate bactericidal effect and a method of preparing the same. The antibacterial composite material according to the present invention can kill bacteria or viruses that come into contact with the antibacterial composite material within several minutes, for example, within a short period of 5 to 10 minutes, thereby having an immediate and effective antibacterial and bactericidal effect.

In addition, the antibacterial composite material maintains the bactericidal effect for a longer period of time compared to existing antibacterial agents.

The antibacterial composite material having an immediate bactericidal effect, according to one embodiment of the present invention, has a shape in which an island form of aluminum hydroxide is bonded to the surface of a copper compound. Specifically, aluminum hydroxide particles are bonded in an island form, on the surface of the copper compound, in which the aluminum hydroxide particles have a particle size smaller than that of the copper compound, and the copper compound has an average particle size in a range of 6 µm to 20. On the surface of the copper compound, a plurality of aluminum hydroxide particles may be bonded. The average particle size of the aluminum hydroxide particles may be in a range of 10 nm to 500 nm.

The aluminum hydroxide is a highly crystalline boehmite composite material particle composed of a first boehmite in a gamma phase (γ-phase) and a second boehmite obtained by dehydration of aluminum hydroxide, in which the first boehmite and the second boehmite are bonded to each other by a hydrogen bond.

Another embodiment of the present invention relates to a method of manufacturing an antibacterial composite material having an immediate bactericidal effect. The antibacterial composite material prepared by the present embodiment may an antibacterial composite material having an immediate bactericidal effect, according to one embodiment of the present invention.

The method according to the present embodiment includes: a mixing step of mixing an aluminum hydroxide composition and a copper compound to produce a raw material mixture; a spray drying step of spray drying the raw material mixture to form an antibacterial composite material; and a cooling step of cooling the antibacterial composite material.

The antibacterial composite material has a shape in which an island form of aluminum hydroxide is bonded to the surface of the copper compound.

First, the mixing step is a step of mixing an aluminum hydroxide composition and a copper compound to produce a raw material mixture.

In this step, the aluminum hydroxide composition and the copper compound may be mixed in a weight ratio of 1:0.7 to 1.2. The aluminum hydroxide composition refers to an aqueous solution in which aluminum hydroxide is contained at a concentration of 5% to 15% by weight in ultra-pure water. The aluminum hydroxide composition has a sol form in which the aluminum hydroxide particles are dispersed in the ultra-pure water serving as a solvent, like a colloid.

The immediate bactericidal effect and the long-lasting bactericidal effect of the antibacterial composite material according to the present invention are effects exhibited when the aluminum hydroxide composition and the copper compound are included in the weight ratio range described above. When the weight ratio of the aluminum hydroxide composition and the copper compound in the raw material mixture is outside the weight ratio range described above, only the general bactericidal effect can be obtained, and the immediate bactericidal effect cannot be obtained. Here, the general bactericidal effect means that the ability of killing bacteria is exhibited in several hours after the contact with bacteria, and the immediate bactericidal effect means that the ability of killing bacterial is exhibited in several minutes. When the mixing ratio is outside the range, the antibacterial effect and the bactericidal effect cannot be long-lasting. Therefore, it is preferable to mix the aluminum hydroxide composition and the copper compound in the weight ratio range described above.

The aluminum hydroxide composition may contain 85% to 95% by weight of ultra-pure water and 5% to 15% by weight of aluminum hydroxide.

The aluminum hydroxide contained in the aluminum hydroxide composition is a powder of nano-sized aluminum hydroxide particles. To obtain the nano-sized aluminum hydroxide particles, after mixing ultra-pure water and aluminum hydroxide in the weight ratio described above, the resulting mixture is ground by milling.

The milling process may be performed by mixing ultra-pure water with aluminum hydroxide and adding beads with a size of 1 to 5 mm to a grinding chamber at a filling rate of 50% to 70% by volume. The milling may be performed at a rotation speed of 2000 to 4000 rpm and a flow rate of 80 to 140 l/hr.

When the milling process is performed under such conditions, the aluminum hydroxide particles are milled into uniform nano-sized particles from micro-sized particles, so that the bonding force with the copper compound is increased. Therefore, the bactericidal effect of the antibacterial composite material can be maintained for a long period of time.

In this step, the aluminum hydroxide composition and the copper compound may be mixed at the weight ratio described above and then stirred evenly. The stirring may be performed at a speed of 100 to 500 rpm for 5 to 10 hours. When the stirring speed is excessively slow or the stirring time is insufficient, it is difficult to achieve uniform dispersion. When the stirring speed is excessively fast, bubbles occur and the yield of an antibacterial composite material composed of the copper compound and the aluminum hydroxide in the subsequent step, which is the spray drying step, is reduced. Therefore, it is preferable that the stirring is performed under the process conditions described above.

The antibacterial composite material of the present invention has a shape in which aluminum hydroxide particles are bonded, in an island form, to the surface of the copper compound particles as described above. Specifically, the aluminum hydroxide particles having a particle size smaller than that of the copper compound particles are bonded to the surface of the copper compound particles having a particle size of 6 µm to 20 um. A plurality of aluminum hydroxide particles may be bonded to the surface of the copper compound. The average grain size of the aluminum hydroxide particles may be in a range of 10 nm to 500 nm.

As described above, since a plurality of aluminum hydroxide particles having a size significantly smaller than the copper compound is bounded to the surface of the copper compound particles, an immediate bactericidal effect can be achieved.

When the average particle size of the copper compound particles is smaller than the range described above, it is difficult to form composite particles having an immediate bactericidal effect because it is difficult to attach multiple aluminum hydroxide particles to the surface of a copper compound particle. When the average particle size of the copper particles is larger than the range described above, the bactericidal effect is reduced because the specific surface area of the copper compound is reduced, or there may be a case where the antibacterial composite material cannot be applied depending on the product type.

In addition, when the average particle size of the aluminum hydroxide particles is smaller than the range described above, the influence of the aluminum hydroxide particles is reduced. Therefore, the immediate bactericidal effect of the antibacterial composite material is reduced. When the particle size exceeds the range, since it is difficult for the aluminum hydroxide particles to be bonded to the copper particles, the composite particles may not be formed. When the spray drying is performed, the generation of aluminum hydroxide particles alone rather than the generation of the composite particles may be increased. Therefore, the yield of the composite material is reduced.

Therefore, it is preferable to use the copper compound particles having the average particle size described above and the aluminum hydroxide particles having the particle size described above.

Although at least one of copper hydroxide, copper sulfate, copper chloride, and copper hydrate may be used, it is preferable that copper hydroxide (Cu(OH)₂) be used. This is because copper hydroxide has excellent human and environmental safety, and hydrogen bonding with aluminum hydroxide via a hydroxide group (-OH) can be easily made.

The aluminum hydroxide particles may be commonly used aluminum hydroxide particles, but boehmite particles may be used.

When boehmite particles are used, common boehmite particles such as γ-boehmite, α-boehmite, and pseudo-boehmite may be used. Herein, more preferably, a highly crystalline boehmite composite particle may be used. The boehmite composite is composed of a first boehmite having a gamma (γ) phase and a second boehmite grown through dehydration of aluminum hydroxide in a reactor.

The first boehmite and the second boehmite of the highly crystalline boehmite composite particle may have a physical or chemically bonded structure. Preferably, the first boehmite and the second boehmite may be bonded by a hydrogen bond with the hydroxyl group (-OH) on the surface thereof. This coupling with the second boehmite changes the structure or shape of the micro pores formed on or inside the first boehmite.

The highly crystalline boehmite composite particle may have a specific form in which the second boehmite particles are bonded, by a hydrogen bond, to the surface of the first boehmite particle which is a seed crystal, or may be formed by grinding the specific form to have a controlled particle size. Since the highly crystalline boehmite composite particles have a low specific surface area, the content of moisture or impurities contained in the particles is low, and thus the particles have high quality and stability.

The highly crystalline boehmite composite particles can be prepared by the method described below.

First, the raw materials are prepared by separately grinding γ-boehmite used as seed particles and aluminum hydroxide. In this case, gibsite or bayerite may be used as aluminum hydroxide.

In this case, the grinding is performed through a conventional milling process (ball mill, dynomill, etc.). In the case of the γ-boehmite used as the first boehmite, the grinding is performed through dry grinding or through simultaneous grinding and dispersing in water.

Preferably, each of the raw materials ground by a pretreatment process is mixed with water before being introduced into a reactor and then fed to the reactor in a slurry state. In this case, the slurry-state raw material may be supplied to the reactor by a pressurized injection method. The pressurized injection induces a dehydration reaction of the gibsite or the bayerite, so that the gibsite or bayerite can be rapidly bonded to the hydroxyl group (-OH) of the surface of the γ-boehmite, which is a seed particle, thereby significantly reducing the time required for crystallization.

The pressurization spraying process is preferably performed at a pressure of 50 to 100 atm and a flow rate of 6 to 200 ml/sec. In the pressurization spraying mixture, the amount of the first boehmite is preferably in the range of 1% to 50% by weight. It is preferred that the composition ratio of such raw materials be precisely controlled because it affects the physical properties of the end product which means the highly crystalline boehmite composite particles.

The highly crystalline boehmite composite particles may be prepared by other methods as necessary.

Specifically, γ-boehmite, which is a first boehmite, is mixed with water to be prepared in a slurry state (about 10% to 35% by weight), and the slurry is mixed with ground aluminum hydroxide. The resulting mixture is supplied to a reactor by pressurized spraying.

The content of γ-boehmite contained in the mixture present along with aluminum hydroxide in the form of a slurry may be in a range of 1% to 50% by weight. Further dispersion may be performed so that the γ-boehmite and the aluminum hydroxide can be uniformly mixed as needed.

The prepared raw material mixture is sprayed at a pressure of 50 to 100 atm into a reactor (for example, an autoclave) maintained at a high temperature and a high pressure (10 to 100 bar). The spray flow rate is preferably in a range of 6 to 200 ml/sec. After the entire raw material mixture is put into the reactor, the reactor is aged for a period of time for crystallization.

The crystallization reaction time varies from 5 minutes to 2 hours depending on the composition of the raw material mixture, and it is most preferable that the crystallization reaction time is 1 hour or shorter.

During the crystallization reaction, the aluminum hydroxide supplied in the form of a slurry is subjected to a dehydration reaction under high temperature and high pressure conditions in the reactor. At the same time, γ-boehmite (first boehmite), which is a seed particle, and the pseudo-boehmite formed through the dehydration of aluminum hydroxide are physically and chemically bound by OH- groups present on the surface of the pseudo-boehmite.

The pseudo-boehmites generated around the first boehmite are bonded to the surface of the first boehmite. In this case, the internal pressure of the reactor is preferably maintained in a range of 10 bar to 100 bar.

It is preferable that the highly crystalline boehmite composite particles produced through the method are discharged to the outside from the reactor and then dried at a temperature of about 90°C to 150°C. Alternatively, the crystalline boehmite composite particles may be washed before being dried.

The washing process can remove impurities included in the highly crystalline boehmite composite particles that are reaction products and neutralizes the pH to a neutral region because the slurry containing the reactants discharged from the reactor is basic.

Thereafter, a milling step for adjusting the particle size of the highly crystalline boehmite composite particles may be further performed. However, since the particle size can be adjusted according to the process conditions of the pressurized spraying process, it is desirable that this step be performed only when additional particle size adjustment is required.

These highly crystalline boehmite composite particles can form a stronger bond with copper compounds than ordinary boehmite particles, have excellent thermal conductivity and oil absorption, and have a skin soothing effect. Therefore, when applied to fibers or products that come into direct contact with the human body, there is an effect of reducing the irritation of skin.

Meanwhile, the spray drying step is a step of spray drying the raw material mixture prepared through the mixing step. The spray drying temperature may be in a range of 180°C to 220°C.

The cooling step is a step of cooling the antibacterial composite material prepared through the spray drying step, and the cooling temperature in this step may be in a range of 90°C to 120°C.

In the spray drying step and the cooling step, the temperature condition is a temperature condition to improve the binding efficiency of the aluminum hydroxide and the copper compound, and thus maximizes the yield of the antibacterial composite material which is a composite of the aluminum hydroxide and the copper compound. In addition, the temperature condition enables the antibacterial composite material particles to have a uniform size. Therefore, it is preferable that the temperature is set to be in the range described above.

The average particle size of the antibacterial composite material resulting from the cooling step may be in the range of 5 µm to 15 µm. The antibacterial composite material resulting from the above-described method may be used in a variety of applications.

For example, it can be applied to polymer films, non-woven fabrics, fibers, decorative sheets, paints, rubber products, ABS products, cosmetics and ceramic products such as ceramics, toilet bowls, tiles, and washbasins to impart an antibacterial function to the products.

The antibacterial composite material according to the present invention may be applied to a product as it is in a particle state, may be applied in a mixture with water or an organic solvent, may be used as mixed with a raw material compound when manufacturing a polymer product or a rubber product, or may be used as a mixture with a binder to form a coating layer on the surface of a product. However, the form in which the antibacterial composite material is used may not be limited thereto.

Another embodiment of the present invention relates to a method of preparing an antibacterial fiber using the antibacterial composite material prepared by the method described above.

The antibacterial fiber manufacturing method includes a swelling step of immersing fiber in an immersion liquid for a predetermined time; an antibacterial agent injection step of injecting the antibacterial composite material according to the present invention into the immersion liquid; a heating step of heating the immersion liquid in which the antibacterial composite material is immersed to produce antibacterial fiber; and a washing step of washing the antibacterial fiber having undergone the heating.

The swelling step is a step of swelling the fibers to form a space between the fibers such that the antibacterial composite material is easily attached to the fibers.

Water or an ethanol aqueous solution may be used as the immersion liquid in this step. An ethanol aqueous solution may be preferably used to impart a more effective swelling effect and to increase penetration and adhesion to fibers of the antibacterial composite material.

In this case, it is more preferable to immerse the fiber in the immersion liquid and then heat the fiber for 1 to 3 hours at a temperature in a range of 30°C to 80°C. This is because, when immersed in an immersion liquid at room temperature or low temperature, there is a problem in that the swelling of the fiber is not sufficient and the time required for sufficient swelling is increased, resulting in an excessive increase in the working time. When the swelling is performed at a temperature higher than the temperature range described above or for a longer time than the above-described range, fiber damage occurs. Therefore, it is preferable that the swelling step is performed within the above-mentioned temperature and time ranges.

The step of adding the antibacterial agent is a step of injecting and stirring the antibacterial composite material having an immediate bactericidal effect prepared according to an embodiment of the present invention in the immersion liquid in which the fibers are immersed.

In this step, the antibacterial composite material may be included in an amount of 1 to 10 parts by weight based on 100 parts by weight of the immersion solution. When the content of the antibacterial composite material is less than 1 part by weight, the antibacterial effect is insignificant. When the content exceeds 10 parts by weight, an increase in the amount of the antibacterial composite material that penetrates the fibers is minimal although the amount of the antibacterial composite material added to the immersion liquid increases. Therefore, it is not economical. Therefore, it is preferable that the content of the antibacterial composition material in the immersion liquid be fall within the range described above.

In the antibacterial agent injection step, it is preferable to stir the antibacterial composite material for 1 to 5 hours after the antibacterial composite material is injected.

Next, the heating step is a step of bonding the antibacterial composite material to the fiber. In the heating step, the immersion liquid is heated to a temperature range of 30°C to 80°C, and the temperature range is maintained for 3 to 10 hours.

When the heating step is performed below the temperature range or for a time shorter than the lower limit of the time range, the bonding efficiency is reduced compared to the amount of the antibacterial composite material used, due to insufficient bonding. When the heating step is performed at temperature above the temperature range or for a time longer than the time range, fiber damage may occur. Therefore, the heating step is preferably performed to satisfy the temperature range and time range described above.

The washing step is a step of washing the antibacterial fibers that have undergone the heating step, thereby washing off the remaining antibacterial composite material that is not attached to the antibacterial fibers, and removing various foreign substances. The washing may be performed once or multiple times using clean water or detergent-containing water.

Hereinafter, specific actions and effects of the present invention will be described with reference to examples. However, the examples are presented for only illustrative purposes, the scope of the present invention is not limited by the examples described below.

### [Preparation Example]

### [Preparation of Aluminum Hydroxide

As a first boehmite used as a seed crystal, gamma-phase (γ-phase) boehmite (AOH, Osangjaiel Co., Ltd.) was dispersed in water to be prepared in a slurry form. Gibsite was used as aluminum hydroxide that was converted to a second boehmite through dehydration, and it was ground to become secondary particles having a size range of 0.8 µm to 11.5 µm using a milling process. The secondary particles and the gamma-phase boehmite existing as a slurry were mixed and pressurized and sprayed into an autoclave, which is a pressure vessel having a high temperature and a high pressure. The pressurized spraying is performed at a pressure of 70 atm and a flow rate of 100 ml/sec. The crystallization step of aging was then performed for 50 minutes for crystallization to produce the highly crystalline boehmite composite particles.

Next, 10% by weight of the highly crystalline boehmite composite particles and 90% by weight of ultra-pure water were mixed, and the mixture was milled using a mead mill device (Wab dynomill ecm-ap2) to prepare a nano-sol solution containing highly crystalline boehmite composite particles having an average particle size of 80 to 200 nm. In this case, the bead mill having a particle diameter of 3 mm was charged by 65% by volume, the rotation speed was set to 2380 rpm, and the flow rate was set to 108 L/hr.

### Preparation of Antibacterial Composite Material

The previously prepared aluminum hydroxide composition and Cu(OH)₂ powder having an average particle size of 6 µm to 15 µm were mixed in a weight ratio of 1:1 and stirred at a speed of 200 RPM for 7 hours to prepare a uniform colloidal solution. Then, using an atomizer, the solution was sprayed and dried at a pressure of 3 bar, an inlet temperature of 180°C to 220°C, and an outlet temperature of 90°C to 120°C to produce an antibacterial composite material powder.

The resulting antibacterial composite material was found to have physical properties: a pH of 6 to 7, EC of 100 µs to 200 µs, a D₁₀ particle size of 3.24 um, a D₅₀ particle size of 7.80 um, and a D₉₅ particle size of 16.27 µm.

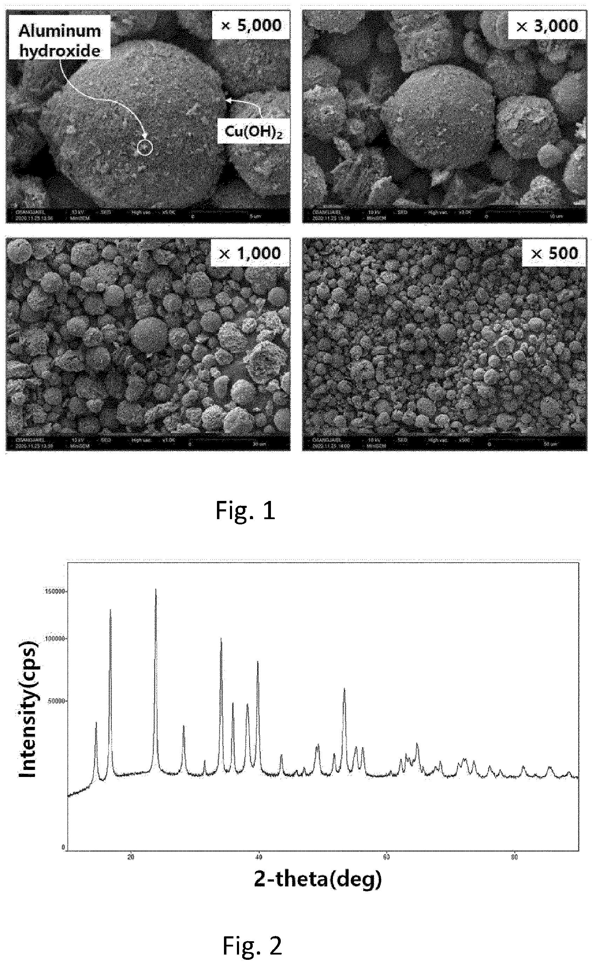

SEM images (5,000-fold, 3,000-fold, 1,000-fold, and 500-fold magnification) of the resulting antibacterial composite material are shown in FIG. 1, and the XRD result is shown in FIG. 2.

### [Experimental Example 1]

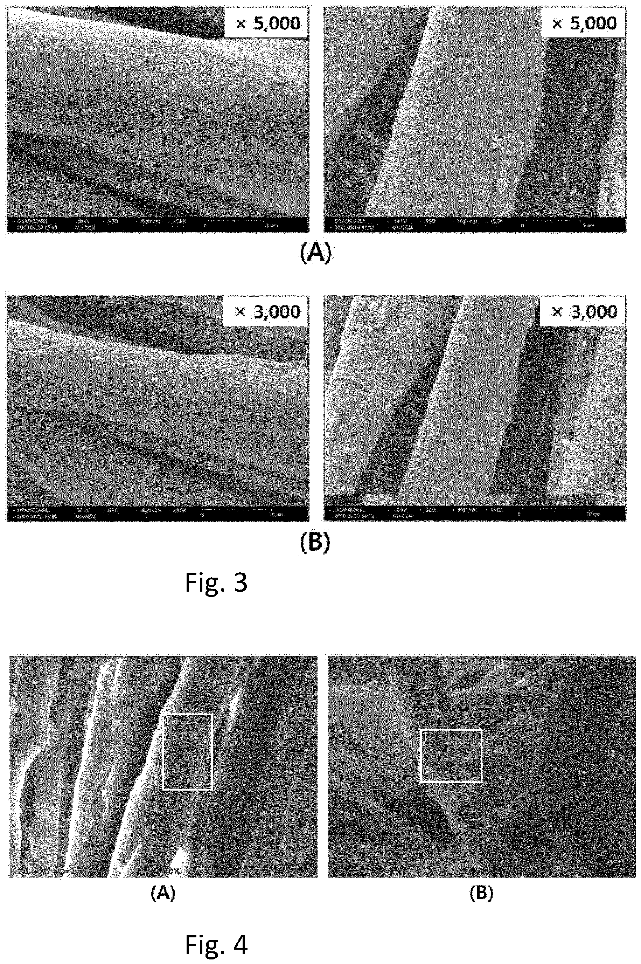

First, cotton fibers were immersed in an aqueous solution of 20% ethanol and heated at 50°C for 2 hours to swell the cotton fibers. Next, the temperature elevation was stopped, and 8 parts by weight of the antibacterial composite material was added per 100 parts by weight of the solution, and the mixture was stirred for 3 hours. Then, the mixture was heated 65°C for 6 hours so that the cotton fibers was coated with the antibacterial composite material, and then washed twice to produce a cotton fiber coated with the antibacterial composite material (Example 1). Here, an SEM image of the fiber of Example 1 was taken and is illustrated in FIGS. 3A and 3B. The left sides of FIGS. 3A and 3B show cotton fibers which are not yet coated with the antibacterial composite material, and the right sides are cotton fibers coated with the antibacterial composite material.

In addition, cotton fibers coated with copper hydroxide (Comparative Example 1) was prepared using the same method as in Example 1, except that copper hydroxide (Cu(OH)₂) was used alone instead of the antibacterial composite material.

Next, an antibacterial performance test (AATCC-TM2019) was performed for Example 1 and Comparative Example 1, and the results are shown in Table 1. As a control, cotton fibers without any antibacterial treatment were used.

Specifically, the fiber sample was cut to have a diameter of 4.8 ± 0.1 cm and a weight of 1.0 ± 0.1 g, sterilized in an autoclave at a temperature of 121°C±2°C for 15 minutes, diluted with a mixed solution of 5wt% Nutrient Broth and 0.05wt% Trition X-100, neutralized with Dey Engley Broth, inoculated with Staphylococcus aureus ATCC 6538 and Klebsiella pneumoniae ATCC 4352 at a concentration of 1.8×10⁵ cells/mL, and then cultured. After the culturing, the antibacterial activity was measured by counting the number of live bacteria over time.

In this case, after 5 minutes of inoculation, the culture medium was smeared on a solid medium using a swap, then secondary culturing was performed, the number of live bacteria was counted, and the antibacterial activity was measured after 5 minutes of the inoculation. When 24 hours elapsed after the inoculation, the number of bacteria in the culture medium was counted to determine the antibacterial activity.

**[Table 1]**

| (Cells/mL) | | Control | Comparative Example 1 | Example 1 |
|---|---|---|---|---|
| Staphylococcus | After 5 minutes | 1.8×10⁵ | 1.8×10⁵ | 7.2×10³ |
| | After 24 hours | 7.0×10⁶ | < 100 | < 100 |
| Pneumonia | After 5 minutes | 1.8×10⁵ | 1.8×10⁵ | < 100 |
| | After 24 hours | 3.9×10⁷ | < 100 | < 100 |

Referring to the results of Table 1, it was confirmed that in Comparative Example 1, the antibacterial effect was exhibited 24 hours after inoculation, but no antibacterial effect exhibited 5 minutes after the inoculation. On the other hand, in the case of Example 1, the antibacterial effect was exhibited immediately after the inoculation, and the antibacterial effect was excellent especially against pneumonia.

Accordingly, when the antibacterial composite material of the present invention, which is a composite of aluminum hydroxide and a copper compound, was applied to fibers, it was confirmed that the bactericidal effect was achieved immediately after a bacterial strain comes into contact with the antibacterial fibers.

### [Experimental Example 2]

EDS analysis and ICP analysis of the fiber samples of Example 1 prepared according to Experiment Example 1 were performed.

EDS analysis was performed using two different regions of the fiber of Example 1 as samples. SEM images of the two samples are shown in FIGS. 4A and 4B. It was found that aluminum hydroxide in island forms was present on the fiber surface. The analysis results for each sample are shown in Table 2.

The ICP analysis was performed using three different region of the fiber of Example 1 as samples. For the ICP analysis, 5100 ICP-OES (Agilent Technologies) was used. The results are shown in Table 3.

**[Table 2]**

| | Elements | Strength (c/s) | Error (2-sigma) | Concentration (wt%) |
|---|---|---|---|---|
| Example 1-1 | C | 30.73 | 2.12 | 39.50 |
| | O | 30.39 | 2.06 | 51.68 |
| | Al | 19.17 | 1.88 | 7.01 |
| | Cu | 1.51 | 0.73 | 1.81 |
| | Total | | | 100.00 |
| Example 1 2 | C | 6.88 | 1.06 | 41.44 |
| | O | 6.00 | 0.90 | 45.95 |
| | Al | 5.35 | 0.98 | 8.40 |
| | Cu | 0.82 | 0.59 | 4.20 |
| | Total | | | 100.00 |

**[Table 3]**

| | Al (ppm) | Cu (ppm) |
|---|---|---|
| Example 1-3 | 44,973.5 | 7, 680.4 |
| Example 1-4 | 40, 607.3 | 8,002.6 |
| Example 1-5 | 39,078.5 | 8,425.3 |
| Average | 41,553.1 | 8,036.1 |

As shown in Table 2 and Table 3 above, copper and aluminum were detected in the antibacterial fibers of Example 1. That is, it was confirmed that the antibacterial composite material of the present invention was well bonded to the fibers to form the antibacterial fibers of Example 1.

### [Experimental Example 3]

A non-woven fabric made of polypropylene was prepared. The non-woven fabric was immersed in an aqueous solution containing the antibacterial composite for a predetermined period of time and then dried. The antibacterial composite was applied at concentration of 1.0 g/m², 1.5 g/m², and 3.0 g/m², on the respective fiber samples. The coated samples were denoted by Example 2, Example 3, and Example 4, respectively. In this case, the concentration of the antibacterial composite material refers to the number of grams (g) per unit area of the non-woven fabric.

Subsequently, for each non-woven sample, an antibacterial test was performed with staphylococcus and pneumonia in the same manner as in Experimental Example 1. The results are shown in Table 4. The pre-vaccination strain was inoculated at a concentration of 1.5 × 10⁵ cells/mL, and the cell concentration was measured 24 hours after inoculation to determine the antibacteriality through the results.

In addition, an oligodynamic effect test was performed according to the experimental method "AATCC 30:2017, TEST III". The results are shown in Table 4. A yeast fungus (Aspergillus niger ATCC 6275) was used as the strain at the time of the oligodynamic effect test, and the growth of the strain was observed after 2 weeks of incubation. When proliferation was not observed, the case was marked with X. When proliferation was observed with a 50-fold microscope, the case was marked with Δ. When proliferation was observed with the naked eye, the case was marked with O.

**[Table 4]**

| | Fungus type | Control | Example 2 | Example 3 | Example 4 |
|---|---|---|---|---|---|
| Antibacterial performance test (cells/mL) | Staphylococcus | 1.5×10⁷ | < 100 | < 100 | < 100 |
| | Pneumonia | 8.4×10⁷ | < 100 | < 100 | < 100 |
| Antifungal activity test | Yeast fungi | - | △ | X | X |

Referring to the results of Table 4, it was confirmed that the non-woven fabric coated with the antibacterial composite material of the present invention has antibacterial properties against staphylococcus and pneumonia and antifungal properties against yeast fungus. In particular, it has been confirmed that the antibacterial effect was exhibited when the antibacterial composite was applied at a concentration of 1.0 g/m² and the antifungal effect was exhibited when the antibacterial composite was applied at a concentration of 1.5 g/m² or higher.

### [Experimental Example 4]

The antibacterial composite material prepared in the preparation example was mixed with ethanol and then stirred evenly to produce an antibacterial composition having a concentration of 10% by weight.

Next, a transparent hard coating paint (DO-444, Haedong Polymer Industry Co., Ltd.) was prepared on the market. The antibacterial composite material was mixed with the hard coating paint at a concentration of 5% by weight. Then, the mixture was applied to form a coating layer on a polycarbonate (PC) film and a PET film and dried to form a coated PC film and a coated PET film (Example 5).

Next, the PET film was then cut to have a size of 5 × 5 cm. An antibacterial test was performed against Escherichia coli ATCC 8739 and Staphylococcus aureus ATCC 6538P (KCL-FIR-1003: 2018). The results of the test are shown in Table 5.

Escherichia coli was inoculated at a concentration of 1.6 × 10⁵ CFU/mL, and Staphylococcus aureus was inoculated at a concentration of 3.6 × 10⁵ CFU/mL. The cell concentration was measured 24 hours later. The results are shown in Table 5.

A sterile stomarker film was used as a control.

**[Table 5]**

| (CFU/ml) | Control | Example 5 |
|---|---|---|
| Escherichia Coli | 9.1×10⁶ | < 10 |
| Staphylococcus aureus | 9.3×10⁶ | < 10 |

First, a visual observation of the coated PC film and the coated PET film was performed, and it was confirmed that the transparency of the films was maintained. Table 5 also shows that the antibacterial composite material of the present invention has excellent antibacterial power against E. coli and Staphylococcus aureus when used as mixed in a paint.

### [Experimental Example 5]

First, an antibacterial coating solution was prepared by mixing 1% to 4% by weight of the antibacterial composite material, 2% by weight of styrene acrylic copolymer (Fine chem tech), 0.5 % by weight of propylene glycol (SK Chemical) as a non-ionic surfactant, 0.2% by weight of sodium dioctyl sulfosuccinate (Hannong Chemical) as an anionic surfactant, 0.05% by weight of a silicone-based antifoaming agent (AFE-3150, Dow chemical), and a residual fraction of pure water.

Next, a polypropylene non-woven fabric was immersed in the antibacterial coating solution and then dried in an oven having a temperature of 50°C for 2 hours to produce an antibacterial composite-coated non-woven fabric.

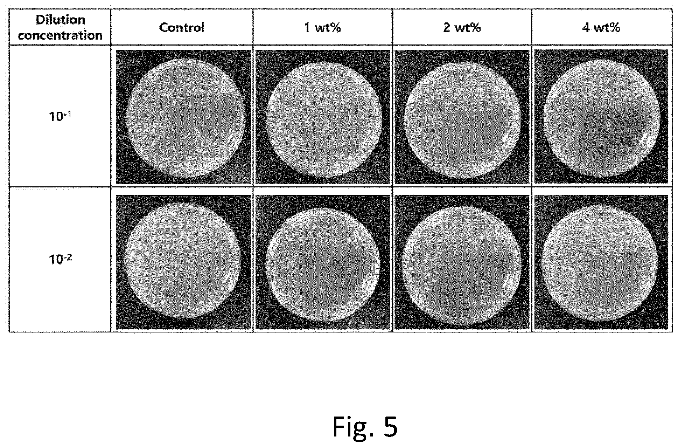

Subsequently, the same antibacterial test against Staphylococcus aureus as in Experimental Example 3 was performed. The results are shown in FIG. 5. The dilution concentration in FIG. 5 refers to a dilution concentration when a liquid culture medium is smeared on a solid medium.

Referring to FIG. 5, it was confirmed that when the antibacterial composite material was included in an amount of 1% by weight, the antibacterial effect against Staphylococcus aureus was obtained.

### [Experimental Example 6]

An antibacterial composite material was prepared using the same method as in the preparation example, except that the content of the aluminum hydroxide composition and the content of Cu (OH)₂ powder were adjusted as shown in Table 6. Thus, antibacterial composite materials denoted by Samples 2 to 6 were manufactured.

Each of the samples prepared above was used to prepare antibacterial fibers denoted by Samples 1 to 7 in the same manner as in Experimental Example 1. Here, Sample 1 and Sample 7 do not use the antibacterial composite material of the present invention, and Sample 1 uses the aluminum hydroxide composition prepared according to the preparation as an antibacterial agent alone. Sample 7 used the Cu(OH)₂ powder alone.

**[Table 6]**

| | Aluminum hydroxide (parts by weight) | Cu(OH)₂ (parts by weight) |
|---|---|---|
| Sample 1 | 1.0 | 0.0 |
| Sample 2 | 1.0 | 0.5 |
| Sample 3 | 1.0 | 0.7 |
| Sample 4 | 1.0 | 1.0 |
| Sample 5 | 1.0 | 1.2 |
| Sample 6 | 1.0 | 1.4 |
| Sample 7 | 0.0 | 1.0 |

Thereafter, an antibacterial test was performed in the same manner as in Experimental Example 1. The results are shown in Table 7. Staphylococcus was inoculated at a concentration of 2.1 × 10⁵ cells/mL, and pneumonia was inoculated at a concentration of 1.3 × 10⁵ cells/mL.

**[Table 7]**

| | Staphylococcus (cells/mL) | | Pneumonia (cells/mL) | |
|---|---|---|---|---|
| | After 5 minutes | After 24 hours | After 5 minutes | After 24 hours |
| Sample 1 | 2.1×10⁵ | < 100 | 1.3×10⁵ | < 100 |
| Sample 2 | 2.1×10⁵ | | 5.2×10³ | |
| Sample 3 | 9.7×10³ | | < 100 | |
| Sample 4 | 6.9×10³ | | < 100 | |
| Sample 5 | 8.1×10³ | | < 100 | |
| Sample 6 | 2.1×10⁵ | | 1.3×10⁵ | |
| Sample 7 | 2.1×10⁵ | | 1.3×10⁵ | |

The results of Table 7 above reveals that both Sample 1 and Sample 7 had excellent antibacterial effect after 24 hours. In particular, in the case of Sample 3 and Sample 5, it was found that the bactericidal effect on both strains was exhibited 5 minutes immediately after strain inoculation. In particular, the bactericidal effect on pneumonia was found to be very excellent.

In addition, it was confirmed that Sample 2 exhibited an immediate bactericidal effect on pneumonia.

From these results, it was confirmed that the composite combining a copper compound and an aluminum hydroxide composition containing aluminum hydroxide particles exhibited an immediate bactericidal effect.

Particularly, when manufacturing an antibacterial composite material to obtain an immediate bactericidal effect while using the antibacterial composite material of the present invention, it was confirmed that a preferable weight ratio of the aluminum hydroxide composition and the copper compound was 1 part by weight to 1.2 parts by weight or less. More preferably, the weight ratio of the aluminum hydroxide composition to the copper compound was 1:0.7 to 1.2.

### [Experimental Example 7]

Each antibacterial fiber sample prepared in Experimental Example 7 was rested in an interior space having a temperature in a range of 20°C to 25°C and a relative humidity in a range of 45% to 55%. An antibacterial test for staphylococcus was performed after one month, three months, and five months. The results are shown in Table 8. The antibacterial test was conducted in the same manner as in Experimental Example 7. Staphylococcus was inoculated at a concentration of 2.0 × 10⁵ cells/mL.

**[Table 8]**

| Strain Type | Staphylococcus (cells/mL) | | |
|---|---|---|---|
| Retention period (months) | 1 month | 3 months | 5 months |
| Sample 1 | < 100 | < 100 | 1.2×10⁶ |
| Sample 2 | < 100 | < 100 | 1.4×10⁵ |
| Sample 3 | < 100 | < 100 | < 100 |
| Sample 4 | < 100 | < 100 | < 100 |
| Sample 5 | < 100 | < 100 | < 100 |
| Sample 6 | < 100 | < 100 | 8.1×10³ |
| Sample 7 | < 100 | < 100 | 5.4×10⁴ |

Referring to the results of Table 8 above, it was found that each sample exhibited excellent antibacterial properties up to 3 months after exposure the air. However, after 5 months, it was found that in the case of Sample 1, the antibacterial properties disappeared. In the cases of Sample 2, Sample 6, and Sample 7, the antibacterial properties exhibited very weakly.

On the other hand, in the cases of Samples 3 to 5, the antibacterial properties remained excellent after 5 months.

Therefore, from the results of the present experiment, it was confirmed that the aluminum hydroxide composition and the copper compound were preferably included in the antibacterial composite of the present invention in a weight ratio of 1:0.7 to 1.2.

The present invention is not limited to the above-described specific embodiments and description, and various changes and modifications thereof may be made without departing from the scope of the present invention as defined in the appended claims by those skilled in the art. In addition, such variations may fall within the protection scope of the present invention.

### Industrial Applicability

The present invention provides an antibacterial composite material capable of exhibiting an immediate bactericidal effect against bacteria or viruses for a long period of time. The antibacterial composite material can provide an effective antibacterial and antiviral function when applied on a variety of areas for which an antibacterial function is required. Aluminum hydroxide is bonded, in an island form, to the surface of a copper compound to immediately exhibit the bactericidal effect that lasts for a long time. Therefore, the antibacterial composite material may be applied on a variety of areas requiring an antibacterial function, thereby providing an effective antibacterial and antiviral effect. Therefore, the antibacterial composite material has industrial applicability.

## Claims

1. An antibacterial composite material with immediate bactericidal effect, the antibacterial composite material being configured such that an island form of aluminum hydroxide is bonded to a surface of a copper compound.

2. The antibacterial composite material of claim 1, wherein the aluminum hydroxide is a highly crystalline boehmite composite particle comprising a first boehmite in a γ-phase and a second boehmite obtained by dehydration of aluminum hydroxide.

3. The antibacterial composite material of claim 2, wherein the first boehmite and the second boehmite are bonded by a hydrogen bond.

4. A method of manufacturing an antibacterial composite material with an immediate bactericidal effect, the method comprising:
a mixing step of preparing a raw material mixture by mixing an aluminum hydroxide composition and a copper compound;
a spray drying step of spray drying the raw material mixture to form an antibacterial composite material; and
a cooling step of cooling the antibacterial composite material,
wherein the antibacterial composite material is configured such that an island form of aluminum hydroxide is bonded to a surface of a copper compound.

5. The method of claim 4, wherein the aluminum hydroxide composition and the copper compound are mixed in a weight ratio of 1:0.7 to 1.2.

6. The method of claim 4, wherein the aluminum hydroxide composition is obtained by mixing aluminum hydroxide with ultra-pure water at a concentration of 5% to 15% by weight and then milling the resulting mixture.

7. The method of claim 4, wherein the copper compound particle has an average particle size in a range of 6 µm to 20 µm, and the aluminum hydroxide has an average particle size in a range of 10 nm to 500 nm.

8. The method of claim 4, wherein the aluminum hydroxide is a highly crystalline boehmite composite particle comprising a first boehmite in a γ-phase and a second boehmite formed by dehydration of aluminum hydroxide.

9. The method of claim 8, wherein the first boehmite and the second boehmite are bonded by a hydrogen bond.

10. The method of claim 4, wherein the spray drying step is a step of spray drying the raw material mixture at a temperature in a range of 180°C to 220°C.

11. The method of claim 4, wherein the cooling step is a step of cooling antibacterial composite material particles obtained through the spray drying step to a temperature range of 90°C to 120°C.

12. An antibacterial composition having an immediate bactericidal effect, the antibacterial composition being manufactured by the method of any one of claims 4 to 11.
